# EUROPEAN PATENT APPLICATION

(11) **EP 3 816 551 A1**
(43) Date of publication of application: **05.05.2021**
(21) Application number: 20203817.0
(22) Date of filing: 26.10.2020
(51) Int. Cl.: F25D 27/00, G02B 6/00, F21V 33/00, F21V 5/04, F21V 19/00, F21V 8/00

(54) **A COOLING DEVICE WITH EFFECTIVELY ILLUMINATED INNER VOLUME**

(30) Priority: 04.11.2019 TR 201916972
(71) Applicant: Arçelik Anonim Sirketi, 34445 Istanbul (TR)
(72) Inventor: BACAK, Cihat, 34445 ISTANBUL (TR); AKTUNA, Deniz, 34445 ISTANBUL (TR); YILDIRIM, Emre, 34445 ISTANBUL (TR); SAHIN, Burak, 34445 ISTANBUL (TR)

(57) **Abstract**

The present invention relates to a cooling device comprising a body; a door providing access into the body; at least on illumination member which illuminates the inner volume of the body; a lens (5) which is disposed on the illumination member; and a retainer (1) which enables the lens (5) to be fixed onto the illumination member, which supports the lens (5) and which enables the lens (5) to be fixed coaxially with the illumination member such that the lens (5) is suspended and enclosed. By means of the retainer (1) enabling the lens (5) to be fixed in a suspended manner, the distance between the illumination member and the lens (5) can be adjusted, thus ensuring the adjustment of the distance between the lens (5) and the illumination member depending on the intensity of the latter as well as the effective use of the lens (5).

## Description

The present invention relates to a cooling device of which the inner volume is effectively illuminated at the desired illumination angle and intensity.

For illuminating the inner volume of cooling devices, illumination members comprising LEDs (Light Emitting Diode) are used due to low energy consumption. The illumination members are placed into a leakproof housing which is arranged in the body of the cooling device. The light emitted by the illumination member when operated illuminates the inner volume of the cooling device. The intensity of the light beam is the highest in the vicinity of the illumination member and decreases while moving away from the illumination member, resulting in uneven dispersion thereof within the inner volume. Therefore, when the door of the cooling device is opened, the illumination members cause an intense light beam directly in the field of vision of the user, which disturbs the user and decreases ease of use. In particular, this problem prominently occurs when there are a plurality of illumination members successively arranged at a region close to the door.

The state of the art Japanese Patent Application No. JP2010286211 discloses illumination members which are disposed at the front side of the side walls of the body and guiding members which enable the beams emitted by the illumination members to be directed towards the rear side of the body. In this embodiment, LEDs are used as illumination members.

The state of the art United States Patent Application No. US2019162402 discloses LEDs in the form of a strip disposed in the freezing compartment and lenses which polarize the light emitted by the LEDs.

The aim of the present invention is the realization of a cooling device of which the inner volume is effectively illuminated at the desired illumination angle and intensity.

The cooling device realized in order to attain the aim of the present invention, explicated in the first claim and the respective claims thereof, comprises at least on illumination member which is disposed in the body of the cooling device; a lens which is disposed on the illumination member; and a retainer which enables the lens to be fixed onto the illumination member, which supports the lens and which enables the lens to be fixed coaxially with the illumination member such that the lens is suspended and enclosed.

By means of the retainer enabling the lens to be fixed in a suspended manner, the distance between the illumination member and the lens can be adjusted, thus ensuring the adjustment of the distance between the lens and the illumination member depending on the intensity of the latter as well as the effective use of the lens.

The retainer comprises a cylindrical retainer body and a hanging means in the form of a truncated cone inside the retainer body wherein the base of the hanging means overlaps with the body base, the ceiling thereof remains inside the retainer body and the lens is fixed to the ceiling.

In the embodiment of the present invention, the lateral wall of the hanging means is parabolic.

In an embodiment of the present invention, the retainer comprises at least two feet which are oppositely disposed so as to extend downwards from the retainer body and which enable the retainer to be fixed onto the illumination member. In this embodiment of the present invention, the feet are in the form of claws enabling claw coupling. Thus, the retainer is prevented from dislodging and moving unless a force is applied.

In another embodiment of the present invention, the retainer comprises a convex plate which covers the body base. The plate is transparent or translucent.

By means of the present invention, a lens and a lens retainer are used for spot illumination, thus ensuring illumination at the desired illumination angle and intensity. By using said lens and retainer, the light distribution of the LED is decreased from 120° to 50°.

The lens and the retainer realized in order to attain the aim of the present invention, positioned on the illumination member illuminating the inner volume of the cooling device is illustrated in the attached figures, where:
Figure 1 - is the perspective view of a retainer.
Figure 2 - is the sideways view of the retainer.
Figure 3 - is the view of the cross section B-B in Figure 2.
Figure 4 - is the view of the cross section D-D in Figure 2.
Figure 5 - is the bottom view of the retainer.

The elements illustrated in the figures are numbered as follows:
1. Retainer
2. Retainer body
3. Hanging means
4. Foot
5. Lens
6. Lateral wall
7. Body base
8. Plate

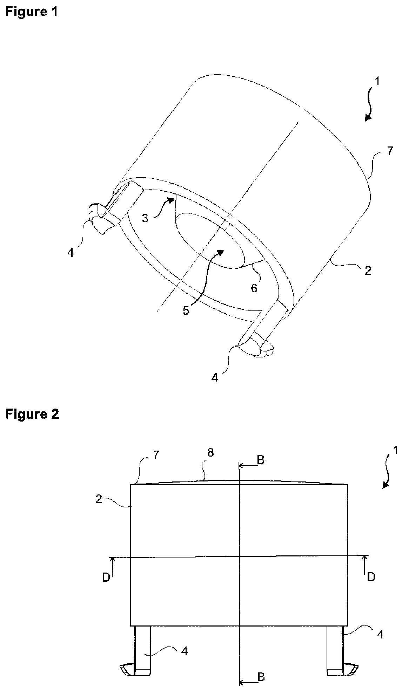

The cooling device comprises a body; a door providing access into the body; at least on illumination member which illuminates the inner volume of the body; a lens (5) which is disposed on the illumination member; and a retainer (1) which enables the lens (5) to be fixed onto the illumination member, which supports the lens (5) and which enables the lens (5) to be fixed coaxially with the illumination member such that the lens (5) is suspended and enclosed. By means of the retainer (1) enabling the lens (5) to be fixed in a suspended manner, the distance between the illumination member and the lens (5) can be adjusted, thus ensuring the adjustment of the distance between the lens (5) and the illumination member depending on the intensity of the latter as well as the effective use of the lens (5) (Figure 1).

The retainer (1) comprises a cylindrical retainer body (2) and a hanging means (3) in the form of a truncated cone inside the retainer body (2) wherein the base of the hanging means (3) overlaps with the body base (7), the ceiling thereof remains inside the retainer body (2) and the lens (5) is fixed to the ceiling. In this embodiment, the part where the lens (5) is seated onto the hanging means remains between the body base (7) and ceiling.

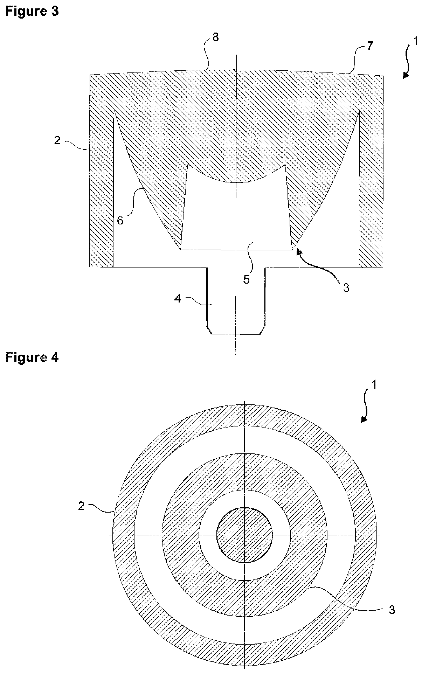

In the embodiment of the present invention, the lateral wall (6) of the hanging means (3) is parabolic (Figure 3).

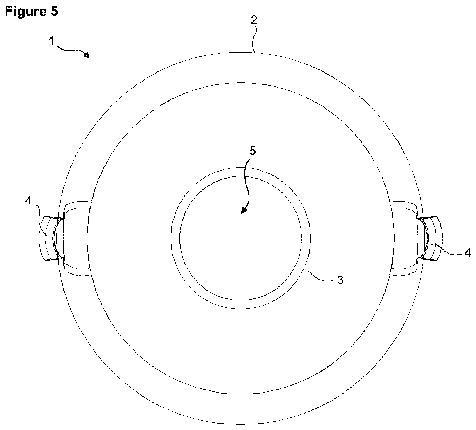

In an embodiment of the present invention, the retainer (1) comprises at least two feet (4) which are oppositely disposed so as to extend downwards from the retainer body (2) and which enable the retainer (1) to be fixed onto the illumination member. In this embodiment of the present invention, the feet (4) are in the form of claws enabling claw coupling. Thus, the retainer (1) is prevented from dislodging and moving unless a force is applied (Figure 2, Figure 4 and Figure 5).

In another embodiment of the present invention, the retainer (1) comprises a convex plate (8) which covers the body base (7). The plate (8) is transparent or translucent.

By means of the present invention, a lens (5) and a lens (5) retainer (1) are used for spot illumination, thus ensuring illumination at the desired illumination angle and intensity. By using said lens (5) and retainer (1), the light distribution of the LED is decreased from 120° to 50°.

## Claims

1. A cooling device **comprising** a body; a door providing access into the body; at least one illumination member which illuminates the inner volume of the body, **characterized by** a lens (5) which is disposed on the illumination member; and a retainer (1) which enables the lens (5) to be fixed onto the illumination member, which supports the lens (5) and which enables the lens (5) to be fixed coaxially with the illumination member such that the lens (5) is suspended and enclosed.

2. A cooling device as in Claim 1, **characterized by** the retainer (1) comprising a cylindrical retainer body (2) and a hanging means (3) in the form of a truncated cone inside the retainer body (2) wherein the base of the hanging means (3) overlaps with the body base (7), the ceiling thereof remains inside the retainer body (2) and the lens (5) is fixed to the ceiling.

3. A cooling device as in Claim 1 and 2, **characterized by** the lens (5) which is attached to the hanging means (3) between the body base (7) and ceiling.

4. A cooling device as in Claim 2, **characterized by** the hanging means (5) of which the lateral wall (6) is parabolic.

5. A cooling device as in Claim 2, **characterized by** the retainer (1) comprising at least two feet (4) which are oppositely disposed so as to extend downwards from the retainer body (2) and which enable the retainer (1) to be fixed onto the illumination member.

6. A cooling device as in Claim 5, **characterized by** the feet (4) which are in the form of claws enabling claw coupling.

7. A cooling device as in Claim 2, **characterized by** the retainer (1) comprising a convex plate (8) which covers the body base (7).
